(19) **Europäisches Patentamt European Patent Office Office européen des brevets**

(11) **EP 4 660 029 A1**

(12) **EUROPEAN PATENT APPLICATION**
published in accordance with Art. 153(4) EPC

(43) Date of publication:
**10.12.2025 Bulletin 2025/50**

(21) Application number: **24749714.2**

(22) Date of filing: **31.01.2024**

(51) International Patent Classification (IPC):
**B60T 13/74** (2006.01)

(52) Cooperative Patent Classification (CPC):
**B60T 13/74**

(86) International application number:
**PCT/CN2024/074997**

(87) International publication number:
**WO 2024/160235 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.01.2023  CN 202310119265**
**31.01.2023  CN 202310119287**

(71) Applicant: **Beijing Chehejia Automobile Technology Co., Ltd.
Beijing 101300 (CN)**

(72) Inventor: **WANG, Zi
Beijing 101300 (CN)**

(74) Representative: **Maiwald GmbH
Elisenhof
Elisenstraße 3
80335 München (DE)**

(54) **VEHICLE BRAKING SYSTEM CONTROL METHOD, DEVICE AND SYSTEM, AND STORAGE MEDIUM**

(57)     A vehicle braking system control method, comprising: acquiring the current electric quantity of an energy storage device in a braking system; when it is determined that the current electric quantity of the energy storage device is lower than a first electric quantity threshold, determining that the braking system meets the requirement of entering an energy-saving mode; and when it is determined that the braking system meets the requirement of entering the energy-saving mode, controlling the braking system to enter the energy-saving mode, wherein when the braking system is determined to be in the energy-saving mode, the braking force of the braking system is controlled not to exceed a preset braking force, and a travelling speed of the vehicle is controlled not to exceed a preset speed. In the method, when it is determined, according to the current electric quantity of the energy storage device in the braking system, that the braking system meets the requirement of entering the energy-saving mode, the braking system is controlled to enter the energy-saving mode, so that the energy consumption of the energy storage device is reduced, and the service time of the vehicle is prolonged when the state of the energy storage device is abnormal. Also provided are a vehicle braking system control device and system, and a storage medium.

```
┌─────────────────────────────────────────────────┐   S101
│ obtaining a current electric quantity of an      │
│ energy storage device in the braking system      │
└─────────────────────────────────────────────────┘
                      │
                      ▼
┌─────────────────────────────────────────────────┐   S102
│ when the current electric quantity of the energy │
│ storage device is lower than a first electric    │
│ quantity threshold, determining that the braking │
│ system meets a requirement for entering an       │
│ energy-saving mode                               │
└─────────────────────────────────────────────────┘
                      │
                      ▼
┌─────────────────────────────────────────────────┐   S103
│ when the braking system meets the requirement    │
│ for entering the energy-saving mode, controlling │
│ the braking system to enter the energy-saving    │
│ mode, wherein when the braking system is in the  │
│ energy-saving mode, a braking force of the       │
│ braking system is controlled not to exceed a     │
│ preset braking force, and a driving speed of the │
│ vehicle is controlled not to exceed a preset     │
│ speed                                            │
└─────────────────────────────────────────────────┘
```

Fig. 1

EP 4 660 029 A1

## Description

The present application claims priority to Chinese patent application filed with the China National Intellectual Property Administration on January 31, 2023, with application number 2023101192879 and title of "method, apparatus and system for controlling braking system of vehicle, and storage medium", as well as priority to Chinese patent application filed with the China National Intellectual Property Administration on January 31, 2023, with application number 2023101192652 and title of " method, apparatus and system for controlling braking system of vehicle, and storage medium ", all of which are incorporated herein by reference.

## TECHNICAL FIELD

The disclosure relates to the field of vehicle control technology, and in particular to a method, an apparatus, and a system for controlling a braking system of a vehicle, and a storage medium.

## BACKGROUND

Due to the pure wire controlled braking system (EMB), the generation of braking force relies entirely on the electric quantity stored in the energy storage device. During driving of the vehicle, when the electric quantity of the energy storage device is too low, the number of braking cycles may not be sufficient to cover the entire driving journey. Therefore, how to extend the available time of the vehicle when the electric quantity of the energy storage device is low has become an urgent technical problem to be solved.

## SUMMARY

The present disclosure provides a method, an apparatus and a system for controlling a braking system of a vehicle, and a storage medium, to extend an available time of the vehicle in an event of an abnormal state of an energy storage device.

The present disclosure provides a method for controlling a braking system of a vehicle, including:

obtaining a current electric quantity of an energy storage device in the braking system;
when the current electric quantity of the energy storage device is lower than a first electric quantity threshold, determining that the braking system meets a requirement for entering an energy-saving mode;
when the braking system meets the requirement for entering the energy-saving mode, controlling the braking system to enter the energy-saving mode, wherein when the braking system is in the energy-saving mode, a braking force of the braking system is controlled not to exceed a preset braking force, and a driving speed of the vehicle is controlled not to exceed a preset speed.

The beneficial effect of the present disclosure is that when it is determined according to the current electric quantity of the energy storage device in the braking system that the braking system meets the requirement for entering the energy-saving mode, the braking system is controlled to enter the energy-saving mode, thereby reducing the energy consumption of the energy storage device and extending the available time of the vehicle.

The first electric quantity threshold is determined by:

obtaining electric quantity consumptions of the energy storage device during multiple use of the vehicle within a preset time period in historical usage records;
calculating an average electric quantity consumption of the energy storage device during the multiple use of the vehicle; and
determining a product of the average electric quantity consumption and a preset coefficient as the first electric quantity threshold.

The method further includes:
when the current electric quantity of the energy storage device is below a second electric quantity threshold, issuing a parking prompt.

When the vehicle is in a driving state, the method further includes:
when the electric quantity of the energy storage device decreases below a third power threshold, activating an intelligent driving function to control the vehicle to drive to a parking location and to park the vehicle.

When the vehicle is in a parked state, the method further includes:

determining whether the current electric quantity of the energy storage device is below a third electric quantity threshold;
when the current electric quantity of the energy storage device is lower than the third electric quantity threshold, controlling the vehicle to enter a start prohibited mode.

The method further includes:

after determining that the braking system enters the energy-saving mode, monitoring the current electric quantity of the energy storage device;
when the current electric quantity of the energy storage device is restored to greater than or equal to the first power threshold, controlling the braking system to exit the energy-saving mode.

When the braking system is in the energy-saving mode, the method further includes:

when an opening of a brake pedal of the vehicle changes, determining a first braking force corresponding to a current opening of the brake pedal; reducing the first braking force to a second braking force according to a preset ratio, wherein a maximum value of the second braking force does not exceed the preset braking force; and controlling the braking system to brake the vehicle based on the second braking force.

When the braking system is in the energy-saving mode, the method further includes:

when an opening of a brake pedal of the vehicle changes, determining a first braking force corresponding to a current opening of the brake pedal; when the first braking force is greater than the preset braking force, controlling the braking system to brake the vehicle according to the preset braking force; when the first braking force is less than the preset braking force, controlling the braking system to brake the vehicle according to the first braking force.

The present disclosure provides a method for controlling a braking system of a vehicle, including:

obtaining a charging speed of an energy storage device in the braking system; when the charging speed of a charging device is less than a preset charging speed, determining that the braking system meets a requirement for entering an energy-saving mode; and when the braking system meets the requirement for entering the energy-saving mode, controlling the baking system to enter the energy-saving mode, wherein when the braking system is in the energy-saving mode, a braking force of the braking system is controlled not to exceed a preset braking force, and a driving speed of the vehicle is controlled not to exceed a preset speed.

The beneficial effect of the present disclosure is that when it is determined according to the charging speed of the energy storage device in the braking system that the braking system meets the requirement for entering the energy-saving mode, the braking system is controlled to enter the energy-saving mode, thereby reducing the energy consumption of the energy storage device and extending the available time of the vehicle.

Obtaining the charging speed of the energy storage device in the braking system includes:

determining whether a charging device for charging the energy storage device has a failure; when the charging device has a failure, determining a charging speed of the charging device for charging the energy storage device as 0, and issuing prompt information indicating that the charging device has a failure; and when the charging device does not have a failure, calculating a charging speed of the charging device for charging the energy storage device according to a charging voltage value and a charging current value of the charging device.

Determining whether the charging device for charging the energy storage device has a failure includes:

obtaining an electrical parameter of the charging device, wherein the electrical parameter of the charging device includes at least one of: a current value at an input end of the charging device, a voltage value at the input end of the charging device, a current value at an output end of the charging device, or a voltage value at the output end of the charging device; and determining that the charging device for charging the energy storage device has a failure when the electrical parameter of the charging device meets any of following conditions: the current value at the input end of the charging device being greater than a first preset current value; the voltage value at the input end of the charging device being greater than a first preset voltage value; the current value at the output end of the charging device being less than a second preset current value; or the voltage value at the output end of the charging device being less than a second preset voltage value.

The preset charging speed is determined by:

obtaining a current driving speed of the vehicle, a currently remaining electric quantity of the energy storage device, and a maximum allowed charging speed of a charging device of the vehicle; and determining the preset charging speed by substituting the current driving speed of the vehicle, the currently remaining electric quantity of the energy storage device, and the maximum allowed charging speed of the charging device of the vehicle into a formula of:

$$\tilde{\mu} = \max\left(a, \ln\left(\frac{kv}{\varepsilon + N}\right)\right)$$

where, $\tilde{\mu}$ is the preset charging speed, $v$ is the current driving speed of the vehicle, $\varepsilon$ is the currently remaining electric quantity of the energy storage device, $a$ is the maximum allowed charging speed of the charging device of the vehicle, and $k$ and $N$ are preset constants.

The method further includes:

after determining that the braking system has entered the energy-saving mode, monitoring the charging speed of the energy-storage device; and
when it is determined according to the charging speed of the energy storage device that the braking system does not meet the requirement for entering the energy-saving mode, controlling the braking system to exit the energy-saving mode.

When the braking system is in the energy-saving mode, the method further includes:

when an opening of a brake pedal of the vehicle changes, determining a first braking force corresponding to a current opening of the brake pedal;
reducing the first braking force to a second braking force according to a preset ratio, wherein a maximum value of the second braking force does not exceed the preset braking force; and
controlling the braking system to brake the vehicle based on the second braking force.

When the braking system is in the energy-saving mode, the method further includes:

when an opening of a brake pedal of the vehicle changes, determining a first braking force corresponding to a current opening of the brake pedal;
when the first braking force is greater than the preset braking force, controlling the braking system to brake the vehicle according to the preset braking force;
when the first braking force is less than the preset braking force, controlling the braking system to brake the vehicle according to the first braking force.

The present disclosure further provides an apparatus for controlling a braking system of a vehicle, including:

an obtaining module, configured to obtain a current electric quantity of an energy storage device in the braking system;
a first determining module, configured to determine that the braking system meets a requirement for entering an energy-saving mode when the current electric quantity of the energy storage device is lower than a first electric quantity threshold; and
a first control module, configured to control the braking system to enter the energy-saving mode when the braking system meets the requirement for entering the energy-saving mode, wherein when the braking system is in the energy-saving mode, a braking force of the braking system is controlled not to exceed a preset braking force, and a driving speed of the vehicle is controlled not to exceed a preset speed.

The first electric quantity threshold is determined by:

obtaining electric quantity consumptions of the energy storage device during multiple use of the vehicle within a preset time period in historical usage records;
calculating an average electric quantity consumption of the energy storage device during the multiple use of the vehicle; and
determining a product of the average electric quantity consumption and a preset coefficient as the first electric quantity threshold.

The apparatus further includes:
a prompt module, configured to issue a parking prompt when the current electric quantity of the energy storage device is below a second electric quantity threshold.
The apparatus further includes:
a second control module, configured to activate an intelligent driving function to control the vehicle to drive to a parking location and to park the vehicle, when the vehicle is in a driving state, and the electric quantity of the energy storage device decreases below a third power threshold.
The apparatus further includes:

a second determining module, configured to determine whether the current electric quantity of the energy storage device is below a third electric quantity threshold when the vehicle is in a parked state; and
a third control module, configured to control the vehicle to enter a start prohibited mode when the current electric quantity of the energy storage device is lower than the third electric quantity threshold.

The apparatus further includes:

a monitoring module, configured to monitor the current electric quantity of the energy storage device after determining that the braking system enters the energy-saving mode;
a fourth control module, configured to control the braking system to exit the energy-saving mode when the current electric quantity of the energy storage device is restored to greater than or equal to the first power threshold.

The apparatus further includes:

a determining module, configured to determining a first braking force corresponding to a current opening of a brake pedal when an opening of the brake pedal of the vehicle changes;
a reducing module, configured to reduce the first braking force to a second braking force according to a preset ratio, wherein a maximum value of the second braking force does not exceed the preset braking force; and
a fifth control module, configured to control the braking system to brake the vehicle based on the second braking force.

The apparatus further includes:

a determining module, configured to determine a first braking force corresponding to a current opening of a brake pedal when an opening of the brake pedal of the vehicle changes; and
a sixth control module, configured to control the braking system to brake the vehicle according to the preset braking force when the first braking force is greater than the preset braking force;
the sixth control module is further configured to control the braking system to brake the vehicle according to the first braking force when the first braking force is less than the preset braking force.

The present disclosure further provides an apparatus for controlling a braking system of a vehicle, including:

an obtaining module, configured to obtain a charging speed of an energy storage device in the braking system;
a third determining module, configured to determine that the braking system meets a requirement for entering an energy-saving mode when the charging speed of a charging device is less than a preset charging speed; and
a control module, configured to control the baking system to enter the energy-saving mode when the braking system meets the requirement for entering the energy-saving mode, wherein when the braking system is in the energy-saving mode, a braking force of the braking system is controlled not to exceed a preset braking force, and a driving speed of the vehicle is controlled not to exceed a preset speed.

The obtaining module includes:

a first judging sub-module, configured to determine whether a charging device for charging the energy storage device has a failure;
a first determining sub-module, configured to determine a charging speed of the charging device for charging the energy storage device as 0 and issue prompt information indicating that the charging device has a failure, when the charging device has a failure; and
a calculating module, configured to calculate a charging speed of the charging device for charging the energy storage device according to a charging voltage value and a charging current value of the charging device, when the charging device does not have a failure.

The judging sub-module includes:

obtaining an electrical parameter of the charging device, wherein the electrical parameter of the charging device includes at least one of: a current value at an input end of the charging device, a voltage value at the input end of the charging device, a current value at an output end of the charging device, or a voltage value at the output end of the charging device; and
determining that the charging device for charging the energy storage device has a failure when the electrical parameter of the charging device meets any of following conditions:
the current value at the input end of the charging device being greater than a first preset current value;
the voltage value at the input end of the charging device being greater than a first preset voltage value;
the current value at the output end of the charging device being less than a second preset current value; or
the voltage value at the output end of the charging device being less than a second preset voltage value.

The preset charging speed is determined by:

obtaining a current driving speed of the vehicle, a currently remaining electric quantity of the energy storage device, and a maximum allowed charging speed of a charging device of the vehicle; and
determining the preset charging speed by substituting the current driving speed of the vehicle, the currently remaining electric quantity of the energy storage device, and the maximum allowed charging speed of the charging device of the vehicle into a formula of:

$$\tilde{\mu} = \max\left(a, \ln\left(\frac{kv}{\varepsilon+N}\right)\right)$$

where, $\tilde{\mu}$ is the preset charging speed, $v$ is the current driving speed of the vehicle, $\varepsilon$ is the currently remaining electric quantity of the energy storage device, $a$ is the maximum allowed charging speed of the charging device of the vehicle, and $k$ and $N$ are preset constants.

The apparatus further includes:

a monitoring module, configured to monitor the charging speed of the energy-storage device, after determining that the braking system has entered the energy-saving mode; and
the control module is further configured to control the braking system to exit the energy-saving mode, when it is determined according to the charging speed of the energy storage device that the braking system does not meet the requirement for entering the energy-saving mode.

The apparatus further includes:

a determining module, configured to determine a first braking force corresponding to a current opening of the brake pedal when an opening of a brake pedal of the vehicle changes; and
a reducing module, configured to reduce the first braking force to a second braking force according to a preset ratio, wherein a maximum value of the second braking force does not exceed the preset braking force;
the control module is further configured to control the braking system to brake the vehicle based on the second braking force.

The apparatus further includes:

a determining module, configured to determine a first braking force corresponding to a current opening of the brake pedal when an opening of a brake pedal of the vehicle changes;
the control module is further configured to control the braking system to brake the vehicle according to the preset braking force when the first braking force is greater than the preset braking force;
the control module is further configured to control the braking system to brake the vehicle according to the first braking force when the first braking force is less than the preset braking force.

The present disclosure further provides a system for controlling a braking system of a vehicle, including:

at least one processor; and
a memory, connected in communication with the at least one processor,
wherein the memory is stored with instructions that can be executed by the at least one processor to implement the method for controlling a braking system of a vehicle described in any of embodiments above.

The present disclosure further provides a computer readable storage medium, wherein, when instructions in the storage medium are executed by a processor of a system for controlling a braking system of a vehicle, the system for controlling the braking system of the vehicle is enabled to implement the method for controlling the braking system of the vehicle described in any of embodiments above.

Other features and advantages of the present disclosure will be set forth in the following specification, and in part will become apparent from the specification, or may be learned by implementing the present disclosure. The purpose and other advantages of the present disclosure can be achieved and obtained through the structure specifically indicated in the written specification, claims, and drawings.

The technical solution of the present disclosure will be further described in detail through the accompanying drawings and embodiments.

## BRIEF DESCRIPTION OF THE DRAWINGS

The accompanying drawings are used to provide further understanding of the present disclosure and form a part of the specification. They are used together with the embodiments of the present disclosure to explain the present disclosure and do not constitute limitations on the present disclosure. In the drawings:

Fig. 1 is a flowchart of a method for controlling a braking system of a vehicle in an embodiment of the present disclosure;
Fig. 2 is a flowchart of another method for controlling a braking system of a vehicle in an embodiment of the present disclosure;
Fig. 3 is a block diagram of an apparatus for controlling a braking system of a vehicle in an embodiment of the present disclosure;
Fig. 4 is a block diagram of another apparatus for controlling a braking system of a vehicle in an embodiment of the present disclosure;
Fig. 5 is a schematic diagram of a hardware structure of a system for controlling a braking system of a vehicle in an embodiment of the present disclosure.

## DETAILED DESCRIPTION

The preferred embodiments of the present disclosure are described below in conjunction with the accompanying drawings. It should be understood that the preferred embodiments described herein are only for illustrating and explaining the present disclosure, and are not intended to limit the present disclosure.

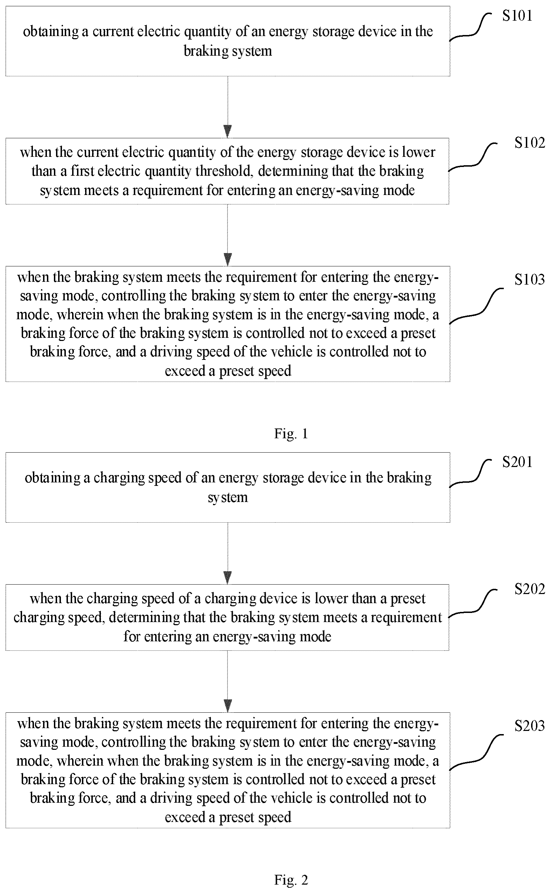

Fig. 1 is a flowchart of a method for controlling a braking system of a vehicle in an embodiment of the present disclosure. As shown in Fig. 1, the method can be implemented as following steps S101-S103.

In step S101, a current electric quantity of an energy storage device in the braking system is obtained.

In step S102, when the current electric quantity of the energy storage device is lower than a first electric quantity threshold, it is determined that the braking system meets a requirement for entering an energy-saving mode.

In step S103, when the braking system meets the requirement for entering the energy-saving mode, the braking system is controlled to enter the energy-saving mode, wherein when the braking system is in the energy-saving mode, a braking force of the braking system is controlled not to exceed a preset braking force, and a driving speed of the vehicle is controlled not to exceed a preset speed.

In the present disclosure, the current electric quantity of the energy storage device in the braking system is obtained, and when it is determined that the current electric quantity of the energy storage device is lower than the first electric quantity threshold, it is determined that the braking system meets the requirement for entering the energy-saving mode. Specifically, it can be determined whether the braking system meets the requirement for entering energy-saving mode by judging whether the current electric quantity of the energy storage device is lower than the first electric quantity threshold; when the current electric quantity of the energy storage device is lower than the first electric quantity threshold, it indicates that the current electric quantity of the energy storage device in the braking system is not sufficient to support the vehicle to complete too many braking cycles, and it is determined that the braking system meets the requirement for entering energy-saving mode. The first electric quantity threshold may be a fixed value, for example, the first electric quantity threshold may be 40% of the maximum electric quantity of the energy storage device.

In addition, the first electric quantity threshold can also be determined in the following way.

The first electric quantity threshold is determined by: obtaining electric quantity consumptions of the energy storage device during multiple use of the vehicle within a preset time period in historical usage records; calculating an average electric quantity consumption of the energy storage device during the multiple use of the vehicle; and determining a product of the average electric quantity consumption and a preset coefficient as the first electric quantity threshold.

For situations where the user's trip is relatively fixed, the average electric quantity consumed by braking during each use of the vehicle can be obtained based on the user's historical usage records, and a preset multiple of this average electric quantity consumption can be set as the first electric quantity threshold, which ensures that the current electric quantity of the energy storage device meets at least one or multiple trips. For example, if a user travels back and forth from home to work and then back home, one round trip is equivalent to two trips. Therefore, the first electric quantity threshold is set to be twice the average electric quantity consumption to ensure that the current electric quantity of the energy storage device meets at least the number of braking times required for the user to travel back and forth between home and work every day. That is to say, in this example, the preset coefficient is 2. Similarly, the first electric quantity threshold can also be determined based on the average driving distance or braking frequency of the vehicle. When the current electric quantity of the energy storage device is lower than the first electric quantity threshold, it indicates that the current electric quantity of the energy storage device in the braking system is not sufficient to support the vehicle to complete too many braking cycles. Therefore, it is determined that the braking system meets the requirement for entering the energy-saving mode.

In addition, the energy storage device can also set a second electric quantity threshold and a third electric quantity threshold. If the vehicle is in a driving state, when the current electric quantity of the energy storage device is lower than the second electric quantity threshold, a parking prompt will be issued. When the electric quantity of the energy storage device drops below the third electric quantity threshold, the intelligent driving function is activated to control the vehicle to drive to the parking location and park the vehicle. If the vehicle is in a parked state and the current electric quantity of the energy storage device is lower than the third electric quantity threshold, the vehicle is controlled to enter a start prohibited mode. The second electric quantity threshold may be a fixed value, for example, the second electric quantity threshold may be 20% of the maximum electric quantity of the energy storage device, and the third electric quantity threshold may also be a fixed value, for example, the third electric quantity threshold may be 10% of the maximum electric quantity of the energy storage device. The second electric quantity threshold can also be calculated based on the remaining braking times. For example, when the current electric quantity of the energy storage device can only meet the power required for 5 braking times, usually the current electric quantity cannot support the user to drive to the destination. A parking prompt can be issued, and the user can choose an appropriate parking location for parking. The third electric quantity threshold can also be calculated based on the remaining braking times. For example, when the current electric quantity of the energy storage device can only meet the power required for one braking, there is a danger to continue driving. At this time, the intelligent driving function can be activated to forcibly take over the driving authority of the vehicle and control the vehicle to drive to the parking location for parking.

It should be noted that this disclosure can also combine navigation information to determine whether a parking prompt needs to be issued, or activate the intelligent driving function to control the vehicle to drive to the parking location for parking. Specifically, when the current electric quantity of the energy storage device is lower than the second electric quantity threshold, the navigation information of the vehicle is obtained; the distance between the current location of the vehicle and the destination is determined based on the navigation information of the vehicle, and it is determined whether the current electric quantity meets the braking requirements during the vehicle's journey to the destination based on the distance between the current location of the vehicle and the destination; and when the current electric quantity does not meet the electric quantity requirement for the vehicle to travel to the destination, a parking prompt will be issued. It is not difficult to understand that if the current electric quantity meets the requirement for braking during the vehicle's journey to the destination, there is no need to issue a parking prompt.

Similarly, when the current electric quantity of the energy storage device is lower than the third electric quantity threshold, the navigation information of the vehicle is obtained; the distance between the current location of the vehicle and the destination is determined based on the navigation information of the vehicle, and it is determined whether the current electric quantity meets the braking requirements during the vehicle's journey to the destination based on the distance between the current location of the vehicle and the destination; when the current electric quantity does not meet the braking requirement for the vehicle to travel to the destination, the intelligent driving function is activated to control the vehicle to travel to the parking location and park the vehicle. It is not difficult to understand that if the current electric quantity meets the requirement for braking during the vehicle's journey to the destination, there is no need to activate the braking driving function to take over the vehicle. For example, if the current electric quantity can only meet the requirement for braking once, in this case, if the vehicle is still a few kilometers away from the destination and may need to brake several times halfway, it means that the current electric quantity does not meet the requirement for braking during the vehicle's journey to the destination, and if the vehicle is only a few tens of meters away from the destination, it may not need to brake halfway or only need to brake once, and in this case, there is no need to activate the braking driving function to take over the vehicle.

When it is determined that the braking system meets the requirement for entering the energy-saving mode, the braking system is controlled to enter the energy-saving mode. When it is determined that the braking system is in the energy-saving mode, the braking force of the braking system is controlled not to exceed the preset braking force, and the driving speed of the vehicle is controlled not to exceed the preset speed. Specifically, when the braking system enters the energy-saving mode, the braking force is appropriately limited to reduce unnecessary energy consumption. When the braking system is in the energy-saving mode, the braking force of the braking system does not exceed the preset braking force. Due to the fact that the maximum braking force of existing vehicles is higher than the service braking performance defined by regulations (0.643g), when limiting the braking force of the vehicle, the maximum braking force of the vehicle is set to 0.643g, and the braking force of the vehicle is linearly and proportionally limited. Of course, it is also possible to set the maximum braking force of the vehicle to 0.643g. When the original output braking force of the vehicle is less than 0.643g, the braking force is output normally. When the original output braking force is greater than 0.643g, the braking force is set to 0.643g. This limits the braking while meeting the basic braking performance, thus saving energy and increasing the number of possible braking times. When the braking system is in the energy-saving mode, the driving speed of the vehicle does not exceed the preset speed. After the vehicle reaches the defined maximum speed, such as 60kph, generation of driving for the vehicle is stopped, to reduce risk, decrease the need for braking, and increase the number of braking cycles.

The beneficial effect of the present disclosure is that when it is determined according to the current electric quantity of the energy storage device in the braking system that the braking system meets the requirement for entering the energy-saving mode, the braking system is controlled to enter the energy-saving mode, thereby reducing the energy consumption of the energy storage device and extending the available time of the vehicle.

In an embodiment, the method of determining the first electric quantity threshold can be implemented as following steps A1-A3.

In step A1, electric quantity consumptions of the energy storage device during multiple use of the vehicle within a preset time period are obtained in historical usage records.

In step A2, an average electric quantity consumption of the energy storage device during the multiple use of the vehicle is calculated.

In step A3, a product of the average electric quantity consumption and a preset coefficient is determined as the first electric quantity threshold.

In this embodiment, based on the user's historical usage records, the average electric quantity consumption of braking during each usage can be obtained, and a preset multiple of this average electric quantity consumption can be set as the first electric quantity threshold, ensuring that the current electric quantity of the energy storage device meets at least one or multiple trips. For example, if the user travels back and forth from home to work and then back home, one round trip is equivalent to two trips. Therefore, the first electric quantity threshold is set to be twice the average electric quantity consumption to ensure that the current electric quantity of the energy storage device meets at least the number of braking times required for the user to travel back and forth between home and work every day. That is to say, in this example, the preset coefficient is 2.

In an embodiment, the method can also be implemented as following steps.

When the current electric quantity of the energy storage device is less than the second electric quantity threshold, a parking prompt is issued.

In this embodiment, the second electric quantity threshold may be a fixed value, for example, the second electric quantity threshold may be 20% of the maximum electric quantity of the energy storage device. In addition, the second electric quantity threshold can also be calculated based on the remaining braking times. For example, when the current electric quantity of the energy storage device can only meet the power required for 5 braking times, usually the current electric quantity cannot support the user to drive to the destination. A parking prompt can be issued, and the user can choose an appropriate parking location for parking.

In an embodiment, when the vehicle is in the driving state, the method can also be implemented as following steps.

When the electric quantity of the energy storage device drops lower than the third electric quantity threshold, the intelligent driving function is activated to control the vehicle to drive to a parking location and park the vehicle.

In this embodiment, the third electric quantity threshold may be a fixed value, for example, the third electric quantity threshold may be 10% of the maximum electric quantity of the energy storage device. In addition, the third electric quantity threshold can also be calculated based on the remaining braking times. For example, when the current electric quantity of the energy storage device can only meet the power required for one braking, there is a danger to continue driving. At this time, the intelligent driving function can be activated to forcibly take over the driving authority of the vehicle and control the vehicle to drive to the parking location for parking.

In an embodiment, when the vehicle is in the parked state, the method can be implemented as following steps B1-B2.

In step B1, it is determined whether the current electric quantity of the energy storage device is less than the third electric quantity threshold.

In step B2, when the current electric quantity of the energy storage device is lower than the third electric quantity threshold, the vehicle is controlled to enter a start prohibited mode.

In this embodiment, if the vehicle is in the parked state and the current electric quantity of the energy storage device is lower than the third electric quantity threshold, the vehicle can be controlled to enter a start prohibited mode. This start prohibited mode can be achieved by refusing to respond to ignition requests, or by prohibiting the release of the handbrake.

In the technical solution described in the embodiments of the present disclosure, only the current electric quantity of the energy storage device is referred to as the indicator to determine whether to enter the energy-saving mode, without considering the charging speed of the energy storage device. This is to avoid the situation where the charging system is damaged during the charging process of the energy storage device or has already been damaged. Therefore, it is possible to only refer to the current electric quantity of the energy storage device to determine whether to enter the energy-saving mode.

Of course, without considering the factors of charging system damage, it is also possible to determine whether to enter the energy-saving mode by referring to both the current electric quantity and the charging speed. Specifically, when the current electric quantity of the energy storage device is lower than the first electric quantity threshold, it is determined that the braking system meets the requirement for entering the energy-saving mode, which can be implemented as: determining whether the current electric quantity of the energy storage device is lower than the first electric quantity threshold; when the current electric quantity of the energy storage device is lower than the first electric quantity threshold, determining whether the charging speed of the energy storage device is lower than the preset charging speed; when the charging speed of the energy storage device is lower than the preset charging speed, determining that the braking system meets the requirement for entering the energy-saving mode; when the charging speed of the energy storage device is higher than the preset charging speed, determining that the braking system does not meet the requirement for entering the energy-saving mode.

In an embodiment, the method can be further implemented as the following steps C1-C2.

In step C1, after determining that the braking system enters the energy-saving mode, the electric quantity of the energy storage device is monitored.

In step C2, when the electric quantity of the energy storage device is restored to greater than or equal to the first electric quantity threshold, the braking system is controlled to exit the energy-saving mode.

After entering the energy-saving mode, if the charging speed of the energy storage device is greater than the electric quantity consumption speed of the energy storage device, the current electric quantity of the energy storage device will gradually increase. When the current electric quantity of the energy storage device rises to be greater than or equal to the first electric quantity threshold, the risk of insufficient electric quantity required for braking can usually be eliminated. Therefore, after the braking system enters the energy-saving mode, the current electric quantity of the energy storage device is monitored; when the current electric quantity of the energy storage device is restored to be greater than or equal to the first electric quantity threshold, the braking system is controlled to exit the energy-saving mode.

In an embodiment, when the braking system is in the energy-saving mode, the method can be further implemented as the following steps D1-D3.

In step D1, when an opening of a brake pedal of the vehicle changes, a first braking force corresponding to a current opening of the brake pedal is determined.

In step D2, the first braking force is reduced to a second braking force according to a preset ratio, wherein a maximum value of the second braking force does not exceed the preset braking force.

In step D3, the braking system is controlled to brake the vehicle according to the second braking force.

In this embodiment, when the opening of the brake pedal of the vehicle changes, the first braking force corresponding to the current opening of the brake pedal is determined. In order to reduce unnecessary energy consumption, the braking force of the vehicle is restricted in this embodiment. However, to prevent excessive restriction on the braking force, this embodiment determines the braking intention of the driver based on the change in the opening of the pedal. When the opening of the pedal changes to a large degree, it indicates that the driver has a braking intention, and the larger the increase in the opening, the stronger the braking intention. Therefore, when it is determined that the braking system meets the requirement for entering the energy-saving mode, the change in the opening of the brake pedal of the vehicle is monitored to determine the corresponding first braking force based on the current opening of the brake pedal. The first braking force is the braking force corresponding to the current opening when the vehicle in the non energy-saving mode. Since the relationship between the opening of the brake pedal and the braking force of the vehicle in the non energy-saving mode is known in advance, the first braking force is determined based on this relationship and the opening of the brake pedal.

The first braking force is reduced to the second braking force according to a preset ratio, wherein the maximum value of the second braking force does not exceed the preset braking force. Due to the fact that the maximum braking force of existing vehicles is higher than the service braking performance defined by regulations, that is, the maximum braking force of existing vehicles is lower than the actual required service braking force, the first braking force can be reduced to the second braking force according to a preset ratio, where the maximum value of the second braking force does not exceed the preset braking force. For example, the maximum braking force of existing vehicles is 1g, which means the braking force range is [0,1]. When limiting the braking force of the vehicle, the maximum braking force of the vehicle is set to 0.643g, and the braking force is linearly converted, that is, the braking force range is converted to [0,0.643]. Therefore, the second braking force is 0.643 times the first braking force. Based on this preset relationship, the second braking force can be determined. Furthermore, the braking system is controlled to brake the vehicle based on the second braking force.

In an embodiment, when the braking system is in the energy-saving mode, the method can be further implemented as following steps E1-E3.

In step E1, when an opening of the brake pedal of the vehicle changes, a first braking force corresponding to a current opening of the brake pedal is determined.

In step E2, when the first braking force is greater than the preset braking force, the braking system is controlled to brake the vehicle according to the preset braking force.

In step E3, when the first braking force is lower than the preset braking force, the braking system is controlled to brake the vehicle according to the first braking force.

In this embodiment, when the opening of the brake pedal of the vehicle changes, the first braking force corresponding to the current opening of the brake pedal is determined. This embodiment determines the braking intention of the driver based on the change in the opening of the pedal. When the opening of the pedal changes to a large degree, it indicates that the driver has a braking intention, and the larger the increase in the opening, the stronger the braking intention. Therefore, when it is determined that the braking system meets the requirement for entering the energy-saving mode, the change in the opening of the brake pedal of the vehicle is monitored to determine the corresponding first braking force based on the current opening of the brake pedal. The first braking force is the braking force corresponding to the current opening when the vehicle in the non energy-saving mode. Since the relationship between the opening of the brake pedal and the braking force of the vehicle in the non energy-saving mode is known in advance, the first braking force is determined based on this relationship and the opening of the brake pedal.

When the first braking force is greater than the preset braking force, the braking system is controlled to brake the vehicle according to the preset braking force. Due to the fact that the maximum braking force of existing vehicles is higher than the service braking performance defined by regulations, that is, the maximum braking force of existing vehicles is lower than the actual required service braking force, a preset braking force lower than the maximum braking force of the vehicle can be set. When the first braking force is greater than the preset braking force, the braking system is controlled to brake according to the preset braking force, to reduce unnecessary energy consumption. For example, if the preset braking force is set to the legally defined service braking performance of 0.643g, then when the first braking force of the vehicle is greater than 0.643g, the vehicle will be controlled to brake at 0.643g.

When the first braking force is less than the preset braking force, the braking system is controlled to brake the vehicle according to the first braking force. In this embodiment, when the first braking force is less than the preset braking force, the braking force is output normally to meet the basic braking performance. For example, when the preset braking force is 0.643g and the first braking force of the vehicle is less than 0.643g, the braking force of the vehicle is controlled to output normally according to the first braking force.

Fig. 2 is a flowchart of a method for controlling a braking system of a vehicle in an embodiment of the present disclosure. As shown in Fig. 2, the method can be implemented as following steps S201-S203.

In step S201, a charging speed of an energy storage device in the braking system is obtained.

In step S202, when the charging speed of a charging device is less than a preset charging speed, it is determined that the braking system meets a requirement for entering an energy-saving mode.

In step S203, when the braking system meets the requirement for entering the energy-saving mode, the braking system is controlled to enter the energy-saving mode, wherein, when the braking system is in the energy-saving mode, a braking force of the braking system is controlled not to exceed a preset braking force of the braking system, and a driving speed of the vehicle is controlled not to exceed a preset speed.

In this disclosure, the charging speed of the energy storage device corresponding to the braking system is monitored to determine whether the braking system meets the requirement for entering the energy-saving mode based on the charging speed. For example, when the charging speed of the charging device is less than the preset charging speed, it is determined that the braking system needs to enter the energy-saving mode and the braking system is controlled to enter the energy-saving mode.

Specifically, the charging speed of the energy storage device in the braking system can be obtained first. When the charging speed of the charging device is less than the preset charging speed, it is determined that the braking system meets the requirement for entering the energy-saving mode. Specifically, when the charging speed of the charging device is less than the preset charging speed, the power supply capacity of the energy storage device is affected, which affects the number of times of use of the braking system of the vehicle. Therefore, it is necessary to determine whether the charging speed of the charging device is less than the preset charging speed. When the charging speed of the charging device is less than the preset charging speed, it indicates that the braking system meets the requirement for entering the energy-saving module mode, and the braking system needs to enter the energy-saving mode for control.

The preset charging speed is determined by:

> obtaining a current driving speed of the vehicle, a currently remaining electric quantity of the energy storage device, and a maximum allowed charging speed of a charging device of the vehicle; and determining the preset charging speed by substituting the current driving speed of the vehicle, the currently remaining electric quantity of the energy storage device, and the maximum allowed charging speed of the charging device of the vehicle into a formula of:

$$\tilde{\mu} = \max\left(a, \ln\left(\frac{kv}{\varepsilon+N}\right)\right)$$

> where, $\tilde{\mu}$ is the preset charging speed, $v$ is the current driving speed of the vehicle, $\varepsilon$ is the currently remaining electric quantity of the energy storage device, $a$ is the maximum allowed charging speed of the charging device of the vehicle, and $k$ and $N$ are preset constants.

When it is determined that the braking system meets the requirement for entering the energy-saving mode, the braking system is controlled to enter the energy-saving mode. When it is determined that the braking system is in the energy-saving mode, the braking force of the braking system is controlled not to exceed the preset braking force, and the driving speed of the vehicle is controlled not to exceed the preset speed.

To determine whether the braking system meets the requirement for entering the energy-saving mode, it is also possible to comprehensively determine whether the braking system meets the requirement for entering the energy-saving mode based on the charging speed of the charging device and the current electric quantity. The specific method is as follows.

It is determined whether the current electric quantity of the charging device is less than the preset electric quantity; when the current electric quantity of the charging device is less than the preset electric quantity, it is determined whether the charging speed of the charging device is less than the preset charging speed; when the charging speed of the charging device is lower than the preset charging speed, it is determined that the braking system needs to enter the energy-saving mode. Specifically, the preset electric quantity can be set to a fixed value, such as 40%. The preset electric quantity can also be dynamically set based on the operating conditions of the vehicle. For example, for situations where the user's travel is relatively fixed, the average electric quantity consumption of the braking during each use of the vehicle can be obtained based on the user's historical usage records, and the preset multiple of this average electric quantity consumption can be set.

When the braking system enters the energy-saving mode, the braking force is appropriately limited to reduce unnecessary energy consumption. When the braking system is in the energy-saving mode, the braking force of the braking system does not exceed the preset braking force. Due to the fact that the maximum braking force of existing vehicles is higher than the service braking performance defined by regulations (0.643g), when limiting the braking force of the vehicle, the maximum braking force of the vehicle is set to 0.643g, and the braking force of the vehicle is linearly and proportionally limited. Of course, it is also possible to set the maximum braking force of the vehicle to 0.643g. When the original output braking force of the vehicle is less than 0.643g, the braking force is output normally. When the original output braking force is greater than 0.643g, the braking force is set to 0.643g. This limits the braking while meeting the basic braking performance, thus saving energy and increasing the number of possible braking times.

When the braking system is in the energy-saving mode, the driving speed of the vehicle does not exceed the preset speed. After the vehicle reaches the defined maximum speed, such as 60kph, generation of driving for the vehicle is stopped, to reduce risk, decrease the need for braking, and increase the number of braking cycles.

The beneficial effect of the present disclosure is that when it is determined according to the charging speed of the energy storage device in the braking system that the braking system meets the requirement for entering the energy-saving mode, the braking system is controlled to enter the energy-saving mode, thereby reducing the energy consumption of the energy storage device and extending the available time of the vehicle.

In an embodiment, step S201 can be implemented by following steps A1-A3.

In step A1, it is determined whether a charging device for charging the energy storage device has a failure.

In step A2, when the charging device has a failure, a charging speed of the charging device for charging the energy storage device is determined as 0, and prompt information indicating that the charging device has a failure is issued.

In step A3, when the charging device does not have a failure, the charging speed of the charging device for charging the energy storage device is calculated according to a charging voltage value and a charging current value of the charging device.

In this embodiment, the working status of the charging device corresponding to the energy storage device is also monitored, that is, whether the charging device for charging the energy storage device has a failure is determined.

When the charging device has a failure, the charging speed of the charging device for charging the energy storage device is determined as 0. Due to the inability of the charging device to effectively charge the energy storage device when it has a failure, the charging speed of the charging device is determined to be 0 at this time.

When the charging device does not have a failure, the charging speed of the charging device for charging the energy storage device is calculated based on the charging voltage value and charging current value of the charging device. Specifically, the charging speed=charging voltage x charging current. Therefore, the larger the charging current and the higher the charging voltage, the faster the charging speed. For example, the charging voltage is generally 220V. When the charging current is 16A (conventional AC charging), the charging speed is $220 \times 16 = 3.5$kWh, that is, can charge 3.5 kWh of electricity per hour; when the charging capacity is 150-400A (DC charging), the charging speed is $220 \times 200 = 44$kWh, that is, can charge 44 kWh per hour.

In an embodiment, step A1 can be implemented by following steps B1-B2.

In step B1, an electrical parameter of the charging device is obtained, wherein the electrical parameter of the charging device includes at least one of: a current value at an input end of the charging device, a voltage value at the input end of the charging device, a current value at an output end of the charging device, or a voltage value at the output end of the charging device.

In step B2, when the electrical parameter of the charging device meets any of following conditions, it is determined that the charging device for charging the energy storage device has a failure:

the current value at the input end of the charging device being greater than a first preset current value;
the voltage value at the input end of the charging device being greater than a first preset voltage value;
the current value at the output end of the charging device being less than a second preset current value; or
the voltage value at the output end of the charging device being less than a second preset voltage value.

Specifically, in this embodiment, the charging device of the braking system of the vehicle performs charging through a DC/DC (direct current to direct current) power module. Therefore, the values of the voltage and current sensors set at the input and output ends of the DC/DC can be monitored, and the monitored voltage and current values can be sent to the control system of the vehicle. The control unit of the vehicle determines whether the charging device has a failure by judging the current and voltage, and makes corresponding alarms to ensure the safety of the entire vehicle. For example, when the voltage and/or current at the DC/DC input end are higher than the first preset value, it is determined that the charging device has a failure; when the voltage and/or current at the DC/DC output end are less than the second preset value, it is determined that the charging device has a failure. When it is determined that the charging device has a failure, the corresponding branch is cut off, to ensure the safety of the entire vehicle.

In an embodiment, the preset charging speed is determined by:

obtaining a current driving speed of the vehicle, a currently remaining electric quantity of the energy storage device, and a maximum allowed charging speed of a charging device of the vehicle; and
determining the preset charging speed by substituting the current driving speed of the vehicle, the currently remaining electric quantity of the energy storage device, and the maximum allowed charging speed of the charging device of the vehicle into a formula of:

$$\tilde{\mu} = \max\left(a, \ln\left(\frac{kv}{\varepsilon+N}\right)\right)$$

where, $\tilde{\mu}$ is the preset charging speed, $v$ is the current driving speed of the vehicle, $\varepsilon$ is the currently remaining electric quantity of the energy storage device, $a$ is the maximum allowed charging speed of the charging device of the vehicle, and $k$ and $N$ are preset constants.

In this embodiment, the preset charging speed is determined through a formula. It should be noted that in addition to determining the preset charging speed through a formula, other methods can also be used to determine the preset charging speed. Specifically, in a case that the charging device does not have a failure, different preset charging speeds can be determined based on the different operating states of the vehicle. For example, when the vehicle is in a parked state, the energy storage device is in a charging state and does not need to consume energy. At this time, a lower charging speed can be accepted to slowly charge the energy storage device. When the vehicle is in a driving state, different charging speeds should be determined based on the different vehicle speeds and energy levels of the energy storage device. For example, when the vehicle speed is high and the energy level of the energy storage device is low, the vehicle needs to be charged quickly, corresponding to a higher preset charging speed; when the vehicle speed is low and the energy level of the energy storage device is high, the vehicle does not need to be charged rapidly, corresponding to a lower preset charging speed. Meanwhile, in this disclosure, the preset charging speed can be the same as the electric quantity consumption speed or may be the product of the electric quantity consumption speed and a coefficient, to prevent the energy storage device from running out of power and causing the vehicle to be unable to brake normally during driving due to the charging speed being unable to catch up with the electric quantity consumption speed.

In an embodiment, the method can further be implemented as following steps C1-C2.

In step C1, after determining that the braking system has entered the energy-saving mode, the charging speed of the energy-storage device is monitored.

In step C2, when it is determined according to the charging speed of the energy storage device that the braking system does not meet the requirement for entering the energy-saving mode, the braking system is controlled to exit the energy-saving mode.

Some vehicles are equipped with temperature protection mechanisms for charging. For example, when the temperature of the circuit or energy storage device is detected to be higher than the normal temperature value, the charging current will be reduced to prevent the circuit or energy storage device from burning out. In this case, the charging speed of the charging device may be lower than the preset charging speed. When the temperature of the circuit and energy storage device returns to normal, the charging speed of the energy storage device will return to normal. At this time, the charging speed of the energy storage device is higher than the consumption speed. In this case, the braking system no longer meets the requirement for entering the energy-saving mode. Therefore, in this disclosure, after determining that the braking system has entered the energy-saving mode, the charging speed of the energy storage device will also be monitored, and when it is determined based on the charging speed of the energy storage device that the braking system does not meet the requirement for entering the energy-saving mode, the braking system is controlled to exit the energy-saving mode.

In an embodiment, when the braking system is in the energy-saving mode, the method may be further implemented as following steps D1-D3.

In step D1, when an opening of a brake pedal of the vehicle changes, a first braking force corresponding to a current opening of the brake pedal is determined.

In step D2, the first braking force is reduced to a second braking force according to a preset ratio, wherein a maximum value of the second braking force does not exceed the preset braking force.

In step D3, the braking system is controlled to brake the vehicle based on the second braking force.

In this embodiment, when the opening of the brake pedal of the vehicle changes, the first braking force corresponding to the current opening of the brake pedal is determined. In order to reduce unnecessary energy consumption, the braking force of the vehicle is restricted in this embodiment. However, to prevent excessive restriction on the braking force, this embodiment determines the braking intention of the driver based on the change in the opening of the pedal. When the opening of the pedal changes to a large degree, it indicates that the driver has a braking intention, and the larger the increase in the opening, the stronger the braking intention. Therefore, when it is determined that the braking system meets the requirement for entering the energy-saving mode, the change in the opening of the brake pedal of the vehicle is monitored to determine the corresponding first braking force based on the current opening of the brake pedal. The first braking force is the braking force corresponding to the current opening when the vehicle in the non energy-saving mode. Since the relationship between the opening of the brake pedal and the braking force of the vehicle in the non energy-saving mode is known in advance, the first braking force is determined based on this relationship and the opening of the brake pedal.

The first braking force is reduced to the second braking force according to a preset ratio, wherein the maximum value of the second braking force does not exceed the preset braking force. Due to the fact that the maximum braking force of existing vehicles is higher than the service braking performance defined by regulations, that is, the maximum braking force of existing vehicles is lower than the actual required service braking force, the first braking force can be reduced to the second braking force according to a preset ratio, where the maximum value of the second braking force does not exceed the preset braking force. For example, the maximum braking force of existing vehicles is 1g, which means the braking force range is [0,1]. When limiting the braking force of the vehicle, the maximum braking force of the vehicle is set to 0.643g, and the braking force is linearly converted, that is, the braking force range is converted to [0,0.643]. Therefore, the second braking force is 0.643 times the first braking force. Based on this preset relationship, the second braking force can be determined. Furthermore, the braking system is controlled to brake the vehicle based on the second braking force.

In an embodiment, when the first braking force is greater than the preset braking force, the method can be further implemented as following steps E1-E3.

In step E1, when an opening of the brake pedal of the vehicle changes, a first braking force corresponding to a current opening of the brake pedal is determined.

In step E2, when the first braking force is greater than the preset braking force, the braking system is controlled to brake the vehicle according to the preset braking force.

In step E3, when the first braking force is lower than the preset braking force, the braking system is controlled to brake the vehicle according to the first braking force.

In this embodiment, when the opening of the brake pedal of the vehicle changes, the first braking force corresponding to the current opening of the brake pedal is determined. This embodiment determines the braking intention of the driver based on the change in the opening of the pedal. When the opening of the pedal changes to a large degree, it indicates that the driver has a braking intention, and the larger the increase in the opening, the stronger the braking intention. Therefore, when it is determined that the braking system meets the requirement for entering the energy-saving mode, the change in the opening of the brake pedal of the vehicle is monitored to determine the corresponding first braking force based on the current opening of the brake pedal. The first braking force is the braking force corresponding to the current opening when the vehicle in the non energy-saving mode. Since the relationship between the opening of the brake pedal and the braking force of the vehicle in the non energy-saving mode is known in advance, the first braking force is determined based on this relationship and the opening of the brake pedal.

When the first braking force is greater than the preset braking force, the braking system is controlled to brake the vehicle according to the preset braking force. Due to the fact that the maximum braking force of existing vehicles is higher than the service braking performance defined by regulations, that is, the maximum braking force of existing vehicles is lower than the actual required service braking force, a preset braking force lower than the maximum braking force of the vehicle can be set. When the first braking force is greater than the preset braking force, the braking system is controlled to brake according to the preset braking force, to reduce unnecessary energy consumption. For example, if the preset braking force is set to the legally defined service braking performance of 0.643g, then when the first braking force of the vehicle is greater than 0.643g, the vehicle will be controlled to brake at 0.643g.

When the first braking force is less than the preset braking force, the braking system is controlled to brake the vehicle according to the first braking force. In this embodiment, when the first braking force is less than the preset braking force, the braking force is output normally to meet the basic braking performance. For example, when the preset braking force is 0.643g and the first braking force of the vehicle is less than 0.643g, the braking force of the vehicle is controlled to output normally according to the first braking force.

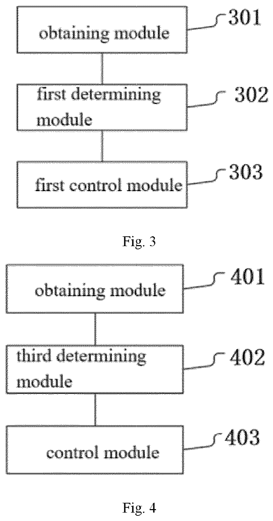

Fig. 3 is a block diagram of an apparatus for controlling a braking system of an vehicle in an embodiment of the present disclosure. As shown in Fig. 3, the apparatus includes:

> an obtaining module 301, configured to obtain a current electric quantity of an energy storage device in the braking system;
> a first determining module 302, configured to determine that the braking system meets a requirement for entering an energy-saving mode when the current electric quantity of the energy storage device is lower than a first electric quantity threshold; and
> a first control module 303, configured to control the braking system to enter the energy-saving mode when the braking system meets the requirement for entering the energy-saving mode, wherein when the braking system is in the energy-saving mode, a braking force of the braking system is controlled not to exceed a preset braking force, and a driving speed of the vehicle is controlled not to exceed a preset speed.

In an embodiment, the first electric quantity threshold is determined by:

> obtaining electric quantity consumptions of the energy storage device during multiple use of the vehicle within a preset time period in historical usage records;
> calculating an average electric quantity consumption of the energy storage device during the multiple use of the vehicle; and
> determining a product of the average electric quantity consumption and a preset coefficient as the first electric quantity threshold.

In an embodiment, the apparatus further includes:
a prompt module, configured to issue a parking prompt when the current electric quantity of the energy storage device is below a second electric quantity threshold.

In an embodiment, the apparatus further includes:
a second control module, configured to activate an intelligent driving function to control the vehicle to drive to a parking location and to park the vehicle, when the vehicle is in a driving state, and the electric quantity of the energy storage device decreases below a third power threshold.

In an embodiment, the apparatus further includes:

a second determining module, configured to determine whether the current electric quantity of the energy storage device is below a third electric quantity threshold when the vehicle is in a parked state; and

a third control module, configured to control the vehicle to enter a start prohibited mode when the current electric quantity of the energy storage device is lower than the third electric quantity threshold.

In an embodiment, the apparatus further includes:

a monitoring module, configured to monitor the current electric quantity of the energy storage device after determining that the braking system enters the energy-saving mode;

a fourth control module, configured to control the braking system to exit the energy-saving mode when the current electric quantity of the energy storage device is restored to greater than or equal to the first power threshold.

The apparatus further includes:

a determining module, configured to determining a first braking force corresponding to a current opening of a brake pedal when an opening of the brake pedal of the vehicle changes;

a reducing module, configured to reduce the first braking force to a second braking force according to a preset ratio, wherein a maximum value of the second braking force does not exceed the preset braking force; and

a fifth control module, configured to control the braking system to brake the vehicle based on the second braking force.

The apparatus further includes:

a determining module, configured to determine a first braking force corresponding to a current opening of a brake pedal when an opening of the brake pedal of the vehicle changes; and

a sixth control module, configured to control the braking system to brake the vehicle according to the preset braking force when the first braking force is greater than the preset braking force;

the sixth control module is further configured to control the braking system to brake the vehicle according to the first braking force when the first braking force is less than the preset braking force.

Fig. 4 is a block diagram of an apparatus for controlling a braking system of a vehicle in the present disclosure. As shown in Fig. 4, the apparatus includes:

an obtaining module, configured to obtain a charging speed of an energy storage device in the braking system;

a third determining module, configured to determine that the braking system meets a requirement for entering an energy-saving mode when the charging speed of a charging device is less than a preset charging speed; and

a control module, configured to control the baking system to enter the energy-saving mode when the braking system meets the requirement for entering the energy-saving mode, wherein when the braking system is in the energy-saving mode, a braking force of the braking system is controlled not to exceed a preset braking force, and a driving speed of the vehicle is controlled not to exceed a preset speed.

In an embodiment, the obtaining module includes:

a first judging sub-module, configured to determine whether a charging device for charging the energy storage device has a failure;

a first determining sub-module, configured to determine a charging speed of the charging device for charging the energy storage device as 0 and issue prompt information indicating that the charging device has a failure, when the charging device has a failure; and

a calculating module, configured to calculate a charging speed of the charging device for charging the energy storage device according to a charging voltage value and a charging current value of the charging device, when the charging device does not have a failure.

In an embodiment, the judging sub-module includes:

obtaining an electrical parameter of the charging device, wherein the electrical parameter of the charging device includes at least one of: a current value at an input end of the charging device, a voltage value at the input end of the charging device, a current value at an output end of the charging device, or a voltage value at the output end of the charging device; and

determining that the charging device for charging the energy storage device has a failure when the electrical parameter of the charging device meets any of following conditions:

the current value at the input end of the charging device being greater than a first preset current value;

the voltage value at the input end of the charging device being greater than a first preset voltage value;

the current value at the output end of the charging device being less than a second preset current value; or

the voltage value at the output end of the charging device being less than a second preset voltage value.

In an embodiment, the preset charging speed is determined by:

obtaining a current driving speed of the vehicle, a currently remaining electric quantity of the energy storage device, and a maximum allowed charging speed of a charging device of the vehicle; and determining the preset charging speed by substituting the current driving speed of the vehicle, the currently remaining electric quantity of the energy storage device, and the maximum allowed charging speed of the charging device of the vehicle into a formula of:

$$\tilde{\mu} = \max\left(a, \ln\left(\frac{kv}{\varepsilon+N}\right)\right)$$

where, $\tilde{\mu}$ is the preset charging speed, $v$ is the current driving speed of the vehicle, $\varepsilon$ is the currently remaining electric quantity of the energy storage device, $a$ is the maximum allowed charging speed of the charging device of the vehicle, and $k$ and $N$ are preset constants.

In an embodiment, the apparatus further includes:
a monitoring module, configured to monitor the charging speed of the energy-storage device, after determining that the braking system has entered the energy-saving mode.

The control module is further configured to control the braking system to exit the energy-saving mode, when it is determined according to the charging speed of the energy storage device that the braking system does not meet the requirement for entering the energy-saving mode.

In an embodiment, the apparatus further includes:

a determining module, configured to determine a first braking force corresponding to a current opening of the brake pedal when an opening of a brake pedal of the vehicle changes; and
a reducing module, configured to reduce the first braking force to a second braking force according to a preset ratio, wherein a maximum value of the second braking force does not exceed the preset braking force.

The control module is further configured to control the braking system to brake the vehicle based on the second braking force.

In an embodiment, the apparatus further includes:

cludes:
a determining module, configured to determine a first braking force corresponding to a current opening of the brake pedal when an opening of a brake pedal of the vehicle changes.

The control module is further configured to control the braking system to brake the vehicle according to the preset braking force when the first braking force is greater than the preset braking force.

The control module is further configured to control the braking system to brake the vehicle according to the first braking force when the first braking force is less than the preset braking force.

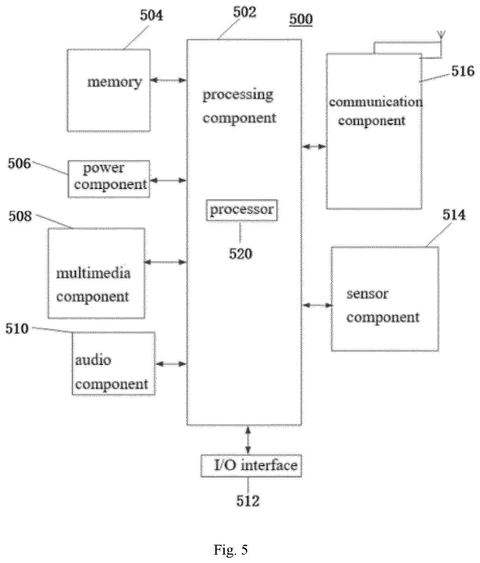

Fig. 5 is a schematic diagram of a hardware structure of a system for controlling a braking system of a vehicle in an embodiment of the present disclosure. As shown in Fig. 5, the system for controlling a braking system of a vehicle includes:

at least one processor 520; and
a memory 504, connected in communication with the at least one processor,
wherein the memory 504 is stored with instructions that can be executed by the at least one processor 502 to implement the method for controlling a braking system of a vehicle described in any of embodiments above.

Referring to Fig. 5, the system 500 for controlling a braking system for a vehicle may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the system 500. The processing component 502 may include one or more processors 520 to execute instructions to complete all or part of the steps in the above methods. Moreover, the processing component 502 may include at least one module which facilitates the interaction between the processing component 502 and other components. For instance, the processing component 502 may include a multimedia module to facilitate the interaction between the multimedia component 508 and the processing component 502.

The memory 504 is configured to store various types of data to support operations in the system 500. Examples of such data include instructions for any applications or methods operated on the system 500, contact data, phonebook data, messages, pictures, video, etc. The memory 504 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the system 500. The power component 506 may include a power management system, one or more power sources, and any other components associated with the generation, management, and distribution of power in the system 500.

The multimedia component 508 includes a screen providing an output interface between the system 500 and a user. In some embodiments, the screen may include a liquid crystal display (LCD) and a touch panel (TP). If the screen includes a touch panel, the screen may be implemented as a touch screen to receive input signals from a user. The touch panel includes one or more touch sensors to sense touches, slips, and gestures on the touch panel. The touch sensors may not only sense a boundary of a touch or slip action, but also sense a wake-up time and a pressure associated with the touch or slip action. In some embodiments, the multimedia component 508 includes a front camera and/or a rear camera. The front camera and/or the rear camera may receive an external multimedia datum while the system 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) that is configured to receive external audio signals when the system 500 is in operating modes such as Alarm Mode, Record Mode, Speech Recognition Mode, and Speech Output Mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the system 500. For example, the sensor component 514 may include a sound sensor. In addition, the sensor component 514 can detect the open/close status of the system 500 for controlling the braking system of the vehicle, the relative positioning of the components, such as the display and keypad of the system 500. The sensor component 514 can also detect the operating status of the system 500 or a component of the system 500, such as the operating status of the air distribution plate, the structural status, the operating status of the discharge scraper, the orientation or acceleration/deceleration of the system 500, and the temperature changes of the system 500. The sensor component 514 may include a proximity sensor configured to detect the presence of nearby objects without any physical contact. The sensor component 514 may also include an optical sensor, such as a CMOS or CCD image sensor, for use in imaging applications. In some embodiments, the sensor component 514 may also include an acceleration sensor, a gyroscope sensor, a magnetic sensor, a pressure sensor, a material accumulation thickness sensor, or a temperature sensor.

The communication component 516 is configured to facilitate wired or wireless communication between the system 500 and other devices and the cloud platform. The system 500 may access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In an exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the system 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the method for controlling the braking system of the vehicle described in any of embodiments above.

The present disclosure further provides a computer readable storage medium, wherein, when instructions in the storage medium are executed by a processor of a system for controlling a braking system of a vehicle, the system for controlling the braking system of the vehicle is enabled to implement the method for controlling the braking system of the vehicle described in any of embodiments above.

Technicians in this field should understand that the embodiments of the present disclosure can be provided as methods, systems, or computer program products. Therefore, the present disclosure may take the form of a fully hardware implementation, a fully software implementation, or a combination of software and hardware implementation. Moreover, the present disclosure may take the form of a computer program product implemented on one or more computer usable storage medium (including but not limited to disk storage and optical storage) containing computer usable program codes.

This disclosure is described with reference to the flowchart and/or block diagram of the method, device (system), and computer program product according to the embodiments of this disclosure. It should be understood that each process and/or block in the flowchart and/or block diagram, as well as the combination of processes and/or blocks in the flowchart and/or block diagram, can be implemented by computer program instructions. These computer program instructions can be provided to a processor of a general-purpose computer, specialized computer, embedded processor, or other programmable data processing device to generate a machine, such that the instructions executed by the processor of the computer or other programmable data processing device generate an apparatus for implementing the functions specified in one or more processes in the flowchart and/or one or more boxes in the block diagram.

These computer program instructions can also be stored in a computer readable memory that can guide a computer or other programmable data processing device to operate in a specific manner, causing the instructions stored in the computer readable memory to produce a manufactured product including instruction devices that implement the functions specified in one or more processes in the flowchart and/or one or more boxes in the block diagram.

These computer program instructions can also be loaded onto a computer or other programmable data processing device, enabling a series of operational steps to be executed on the computer or other programmable device to generate computer implemented processing. The instructions executed on the computer or other programmable device provide steps for implementing the functions specified in one or more processes in the flowchart and/or one or more boxes in the block diagram.

Obviously, technicians in this field can make various modifications and variations to this disclosure without departing from its spirit and scope. In this way, if these modifications and variations of the present disclosure fall within the scope of the claims and equivalent technologies of the present disclosure, then the present disclosure also intends to include these modifications and variations.

**Claims**

1. A method for controlling a braking system of a vehicle, comprising:

    obtaining a current electric quantity of an energy storage device in the braking system;
    when the current electric quantity of the energy storage device is lower than a first electric quantity threshold, determining that the braking system meets a requirement for entering an energy-saving mode;
    when the braking system meets the requirement for entering the energy-saving mode, controlling the braking system to enter the energy-saving mode, wherein when the braking system is in the energy-saving mode, a braking force of the braking system is controlled not to exceed a preset braking force, and a driving speed of the vehicle is controlled not to exceed a preset speed.

2. The method of claim 1, wherein the first electric quantity threshold is determined by:

    obtaining electric quantity consumptions of the energy storage device during multiple use of the vehicle within a preset time period in historical usage records;
    calculating an average electric quantity consumption of the energy storage device during the multiple use of the vehicle; and
    determining a product of the average electric quantity consumption and a preset coefficient as the first electric quantity threshold.

3. The method of claim 1, further comprising:
when the current electric quantity of the energy storage device is below a second electric quantity threshold, issuing a parking prompt.

4. The method of claim 3, wherein, when the vehicle is in a driving state, the method further comprises:
when the electric quantity of the energy storage device decreases below a third power threshold, activating an intelligent driving function to control the vehicle to drive to a parking location and to park the vehicle.

5. The method of claim 1, wherein, when the vehicle is in a parked state, the method further comprises:

    determining whether the current electric quantity of the energy storage device is below a third electric quantity threshold;
    when the current electric quantity of the energy storage device is lower than the third electric quantity threshold, controlling the vehicle to enter a start prohibited mode.

6. The method of claim 1, further comprising:

    after determining that the braking system enters the energy-saving mode, monitoring the current electric quantity of the energy storage device;
    when the current electric quantity of the energy storage device is restored to greater than or equal to the first power threshold, controlling the braking system to exit the energy-saving mode.

**7.** The method of claim 1, wherein, when the braking system is in the energy-saving mode, the method further comprises:

when an opening of a brake pedal of the vehicle changes, determining a first braking force corresponding to a current opening of the brake pedal;

reducing the first braking force to a second braking force according to a preset ratio, wherein a maximum value of the second braking force does not exceed the preset braking force; and controlling the braking system to brake the vehicle based on the second braking force.

**8.** The method of claim 1, wherein, when the braking system is in the energy-saving mode, the method further comprises:

when an opening of a brake pedal of the vehicle changes, determining a first braking force corresponding to a current opening of the brake pedal;

when the first braking force is greater than the preset braking force, controlling the braking system to brake the vehicle according to the preset braking force;

when the first braking force is less than the preset braking force, controlling the braking system to brake the vehicle according to the first braking force.

**9.** A method for controlling a braking system of a vehicle, comprising:

obtaining a charging speed of an energy storage device in the braking system;

when the charging speed of a charging device is less than a preset charging speed, determining that the braking system meets a requirement for entering an energy-saving mode; and

when the braking system meets the requirement for entering the energy-saving mode, controlling the baking system to enter the energy-saving mode, wherein when the braking system is in the energy-saving mode, a braking force of the braking system is controlled not to exceed a preset braking force, and a driving speed of the vehicle is controlled not to exceed a preset speed.

**10.** The method of claim 9, wherein obtaining the charging speed of the energy storage device in the braking system comprises:

determining whether a charging device for charging the energy storage device has a failure;

when the charging device has a failure, determining a charging speed of the charging device for charging the energy storage device as 0, and issuing prompt information indicating that the charging device has a failure; and

when the charging device does not have a failure, calculating a charging speed of the charging device for charging the energy storage device according to a charging voltage value and a charging current value of the charging device.

**11.** The method of claim 10, wherein determining whether the charging device for charging the energy storage device has a failure comprises:

obtaining an electrical parameter of the charging device, wherein the electrical parameter of the charging device comprises at least one of: a current value at an input end of the charging device, a voltage value at the input end of the charging device, a current value at an output end of the charging device, or a voltage value at the output end of the charging device; and

determining that the charging device for charging the energy storage device has a failure when the electrical parameter of the charging device meets any of following conditions:

the current value at the input end of the charging device being greater than a first preset current value;

the voltage value at the input end of the charging device being greater than a first preset voltage value;

the current value at the output end of the charging device being less than a second preset current value; or

the voltage value at the output end of the charging device being less than a second preset voltage value.

**12.** The method of claim 9, wherein the preset charging speed is determined by:

obtaining a current driving speed of the vehicle, a currently remaining electric quantity of the energy storage device, and a maximum allowed charging speed of a charging device of the vehicle; and

determining the preset charging speed by substituting the current driving speed of the vehicle, the currently remaining electric quantity of the energy storage device, and the maximum allowed charging speed of the charging device of the vehicle into a formula of:

$$\tilde{\mu} = \max\left(a, \ln\left(\frac{kv}{\varepsilon + N}\right)\right)$$

where, $\tilde{\mu}$ is the preset charging speed, $v$ is the current driving speed of the vehicle, $\varepsilon$ is the currently remaining electric quantity of the energy storage device, $a$ is the maximum allowed charging speed of the charging device of the vehicle, and $k$ and $N$ are preset constants.

13. The method of claim 9, further comprising:

after determining that the braking system has entered the energy-saving mode, monitoring the charging speed of the energy-storage device; and
when it is determined according to the charging speed of the energy storage device that the braking system does not meet the requirement for entering the energy-saving mode, controlling the braking system to exit the energy-saving mode.

14. The method of claim 9, wherein, when the braking system is in the energy-saving mode, the method further comprises:

when an opening of a brake pedal of the vehicle changes, determining a first braking force corresponding to a current opening of the brake pedal;
reducing the first braking force to a second braking force according to a preset ratio, wherein a maximum value of the second braking force does not exceed the preset braking force; and
controlling the braking system to brake the vehicle based on the second braking force.

15. The method of claim 9, wherein, when the braking system is in the energy-saving mode, the method further comprises:

when an opening of a brake pedal of the vehicle changes, determining a first braking force corresponding to a current opening of the brake pedal;
when the first braking force is greater than the preset braking force, controlling the braking system to brake the vehicle according to the preset braking force;
when the first braking force is less than the preset braking force, controlling the braking system to brake the vehicle according to the first braking force.

16. An apparatus for controlling a braking system of a vehicle, comprising:

an obtaining module, configured to obtain a current electric quantity of an energy storage device in the braking system;

a first determining module, configured to determine that the braking system meets a requirement for entering an energy-saving mode when the current electric quantity of the energy storage device is lower than a first electric quantity threshold; and
a first control module, configured to control the braking system to enter the energy-saving mode when the braking system meets the requirement for entering the energy-saving mode, wherein when the braking system is in the energy-saving mode, a braking force of the braking system is controlled not to exceed a preset braking force, and a driving speed of the vehicle is controlled not to exceed a preset speed.

17. An apparatus for controlling a braking system of a vehicle, comprising:

an obtaining module, configured to obtain a charging speed of an energy storage device in the braking system;
a third determining module, configured to determine that the braking system meets a requirement for entering an energy-saving mode, when the charging speed of a charging device is less than a preset charging speed; and
a control module, configured to control the baking system to enter the energy-saving mode when the braking system meets the requirement for entering the energy-saving mode, wherein when the braking system is in the energy-saving mode, a braking force of the braking system is controlled not to exceed a preset braking force, and a driving speed of the vehicle is controlled not to exceed a preset speed.

18. A system for controlling a braking system of a vehicle, comprising:

at least one processor; and
a memory, connected in communication with the at least one processor,
wherein the memory is stored with instructions that can be executed by the at least one processor to implement the method for controlling a braking system of a vehicle according to any of claims 1-8 or 9-15.

19. A computer readable storage medium, wherein, when instructions in the storage medium are executed by a processor of a system for controlling a braking system of a vehicle, the system for controlling the braking system of the vehicle is enabled to implement the method for controlling the braking system of the vehicle according to any of claims 1-8 or 9-15.

obtaining a current electric quantity of an energy storage device in the braking system ⌐⌐ S101

when the current electric quantity of the energy storage device is lower than a first electric quantity threshold, determining that the braking system meets a requirement for entering an energy-saving mode ⌐⌐ S102

when the braking system meets the requirement for entering the energy-saving mode, controlling the braking system to enter the energy-saving mode, wherein when the braking system is in the energy-saving mode, a braking force of the braking system is controlled not to exceed a preset braking force, and a driving speed of the vehicle is controlled not to exceed a preset speed ⌐⌐ S103

Fig. 1

obtaining a charging speed of an energy storage device in the braking system ⌐⌐ S201

when the charging speed of a charging device is lower than a preset charging speed, determining that the braking system meets a requirement for entering an energy-saving mode ⌐⌐ S202

when the braking system meets the requirement for entering the energy-saving mode, controlling the braking system to enter the energy-saving mode, wherein when the braking system is in the energy-saving mode, a braking force of the braking system is controlled not to exceed a preset braking force, and a driving speed of the vehicle is controlled not to exceed a preset speed ⌐⌐ S203

Fig. 2

```
┌─────────────────────────┐
│   obtaining module      │── 301
└─────────────────────────┘
            │
┌─────────────────────────┐
│  first determining      │── 302
│      module             │
└─────────────────────────┘
            │
┌─────────────────────────┐
│  first control module   │── 303
└─────────────────────────┘
```

Fig. 3

```
┌─────────────────────────┐
│   obtaining module      │── 401
└─────────────────────────┘
            │
┌─────────────────────────┐
│  third determining      │── 402
│      module             │
└─────────────────────────┘
            │
┌─────────────────────────┐
│   control module        │── 403
└─────────────────────────┘
```

Fig. 4

Fig. 5

## INTERNATIONAL SEARCH REPORT

| International application No. |
| --- |
| **PCT/CN2024/074997** |

| A. | CLASSIFICATION OF SUBJECT MATTER |
| --- | --- |
| | B60T13/74(2006.01)i |

According to International Patent Classification (IPC) or to both national classification and IPC

| B. | FIELDS SEARCHED |
| --- | --- |

Minimum documentation searched (classification system followed by classification symbols)

    IPC:B60T B60W

Documentation searched other than minimum documentation to the extent that such documents are included in the fields searched

Electronic data base consulted during the international search (name of data base and, where practicable, search terms used)

    CNTXT, ENTXT, DWPI, CNKI: 制动, 电动, 电子, 机械, 电源, 电池, 电容, 储能, 能量, 低, 不足, 节能, brak+, mechanical, electr+, batter+, capacity, charg+, quantity, energy

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 117162991 A (BEIJING CHJ AUTOMOTIVE TECHNOLOGY CO., LTD.) 05 December 2023 (2023-12-05)<br>    claims 1-11 | 1-8, 16, 18-19 |
| PX | CN 117162992 A (BEIJING CHJ AUTOMOTIVE TECHNOLOGY CO., LTD.) 05 December 2023 (2023-12-05)<br>    claims 1-10 | 9-15, 17-19 |
| X | US 2022194338 A1 (HALDEX VIE (SHANGHAI) ELECTROMECHANICAL BRAKE SYSTEM CO., LTD. et al.) 23 June 2022 (2022-06-23)<br>    description, paragraphs 0056-0145, and figures 1-8 | 1, 3-10, 13-19 |
| A | CN 115503504 A (JIANGLING MOTORS CO., LTD.) 23 December 2022 (2022-12-23)<br>    entire document | 1-19 |
| A | CN 112172782 A (ZHEJIANG GEELY AUTOMOBILE HOLDINGS LTD. et al.) 05 January 2021 (2021-01-05)<br>    entire document | 1-19 |
| A | CN 108544937 A (CHERY AUTOMOBILE CO., LTD.) 18 September 2018 (2018-09-18)<br>    entire document | 1-19 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **28 April 2024** | **29 April 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2024/074997** |

### C.    DOCUMENTS CONSIDERED TO BE RELEVANT

| Category* | Citation of document, with indication, where appropriate, of the relevant passages | Relevant to claim No. |
|---|---|---|
| A | CN 115123245 A (GREAT WALL MOTOR CO., LTD.) 30 September 2022 (2022-09-30) entire document | 1-19 |
| A | US 2014025255 A1 (WILKES UNIVERSITY) 23 January 2014 (2014-01-23) entire document | 1-19 |

Form PCT/ISA/210 (second sheet) (July 2022)

## INTERNATIONAL SEARCH REPORT
### Information on patent family members

International application No.

**PCT/CN2024/074997**

| Patent document cited in search report | | | Publication date (day/month/year) | Patent family member(s) | | | Publication date (day/month/year) |
|---|---|---|---|---|---|---|---|
| CN | 117162991 | A | 05 December 2023 | None | | | |
| CN | 117162992 | A | 05 December 2023 | None | | | |
| US | 2022194338 | A1 | 23 June 2022 | WO | 2021047910 | A1 | 18 March 2021 |
| | | | | JP | 2022548549 | A | 21 November 2022 |
| | | | | EP | 4028295 | A1 | 20 July 2022 |
| | | | | KR | 20220086557 | A | 23 June 2022 |
| CN | 115503504 | A | 23 December 2022 | None | | | |
| CN | 112172782 | A | 05 January 2021 | None | | | |
| CN | 108544937 | A | 18 September 2018 | None | | | |
| CN | 115123245 | A | 30 September 2022 | None | | | |
| US | 2014025255 | A1 | 23 January 2014 | None | | | |

Form PCT/ISA/210 (patent family annex) (July 2022)

**EP 4 660 029 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023101192879

- CN 2023101192652